# EUROPÄISCHE PATENTSCHRIFT

(11) **EP 1 335 149 B1**
(45) Veröffentlichungstag und Bekanntmachung des Hinweises auf die Patenterteilung: **22.03.2006**
(21) Anmeldenummer: 03000781.9
(22) Anmeldetag: 14.01.2003
(51) Int. Cl.: F16F 9/348

(54) **Dämpferkolben für hydraulische Einrichtungen**
Damper piston for hydraulic equipment
Piston d'amortisseur pour équipements hydrauliques

(30) Priorität: 13.02.2002 DE 10206104
(43) Veröffentlichungstag der Anmeldung: 13.08.2003
(73) Patentinhaber: ThyssenKrupp Bilstein GmbH, 58256 Ennepetal (DE)
(72) Erfinder: Feist, Dirk, 44627 Herne (DE); Saadeddin, Kais, Dipl.-Ing., 44866 Bochum (DE)

(56) Entgegenhaltungen:
- EP-A- 0 275 368
- DE-A- 2 109 398
- DE-A- 4 433 056
- DE-B- 1 249 100
- US-A- 3 003 596
- US-A- 3 113 644

## Beschreibung

Die Erfindung betrifft einen Dämpferkolben für hydraulische Einrichtungen, insbesondere für hydraulische Schwingungsdämpfer an Kraftfahrzeugen, nach dem Oberbegriff des Anspruchs 1.

Dämpferkolben für hydraulische Einrichtungen werden dazu eingesetzt, den Durchfluss einer hydraulischen Flüssigkeit, besonders eines Hydrauliköls, bei Schwingungsdämpfern für Kraftfahrzeuge zu dämpfen. Bei Dämpferkolben für hydraulische Schwingungsdämpfer an Kraftfahrzeugen wird dadurch die Federung der Radlagerungen gedämpft.

Derartige Dämpferkolben sind beispielsweise aus der EP 0 275 368 A1 bekannt. Um bei der Dämpfung der hydraulischen Flüssigkeit an Schwingungsdämpfern die gewünschten Kennungswerte zu erhalten, ist es erforderlich, die Durchbrüche durch den Kolbenkörper so groß wie möglich zu gestalten, damit diese Dämpferkolben nicht die Kennung entsprechend einer hydraulischen Drossel erhalten.

Aus der US 3,113,644 ist ein Dämpferkolben gemäß dem Oberbegriff des Patentanspruchs 1 bekannt. Aus dieser Druckschrift ist ein Dämpferkolben bekannt, der einen Kolbenkörper umfasst, in den Durchbrüche mit unterschiedlichsten Formen eingebracht sind. U.a. sind auch sichelförmige Durchbrüche im Kolbenkörper offenbart. Die Abdeckscheiben sind bei dem aus der US 3,113,644 bekannten Dämpferkolben so angeordnet, dass stets ein von den Abdeckscheiben nicht überdeckter Bereich der Durchbrüche vorhanden ist. Soweit in dieser Druckschrift sichelförmige Durchbrüche beschrieben sind, so sind diese mit ihrer konvexen Seite zu der Kolbenstange hinweisend angeordnet.

Obwohl die Dämpfungskennung nach dem Stand der Technik bereits sehr gut ist, soll für so genannte "Komfortventile" eine noch bessere Kennung erreicht werden. Damit stellt sich die Aufgabe, einen noch besseren hydraulischen Durchfluss durch den Kolbenkörper zu erreichen.

Diese Aufgabe wird erfindungsgemäß mit einem Dämpferkolben erreicht, der die Merkmale des Anspruchs 1 aufweist.

Vorteilhafte Aus- und Weiterbildungen sind in den Ansprüchen 2 bis 4 beschrieben.

Der erfindungsgemäße Dämpferkolben weist eine sehr komfortable Dämpfung auf. Er kann vorteilhafterweise nicht nur als Hauptkolben bei einem Stoßdämpfer eingesetzt werden, sondern auch als Dämpferkolben bei einem Bypass innerhalb oder außerhalb des Stoßdämpfers und auch als Bodenventil bei einem Zweirohrstoßdämpfer.

Ein Ausführungsbeispiel der Erfindung ist in der Zeichnung dargestellt und wird im Folgenden näher beschrieben. Es zeigen
- Fig. 1: den Abschnitt eines Schnitts durch einen Stoßdämpfer nach dem Stand der Technik,
- Fig. 2: einen Schnitt durch einen erfindungsgemäßen Kolben in Zusammenwirken mit einer Bypassregelung,
- Fig. 3: die räumliche Darstellung eines Dämpferkolbens gemäß Fig. 2 und
- Fig. 4: die Draufsicht auf einen Dämpferkolben gemäß Fig. 3.

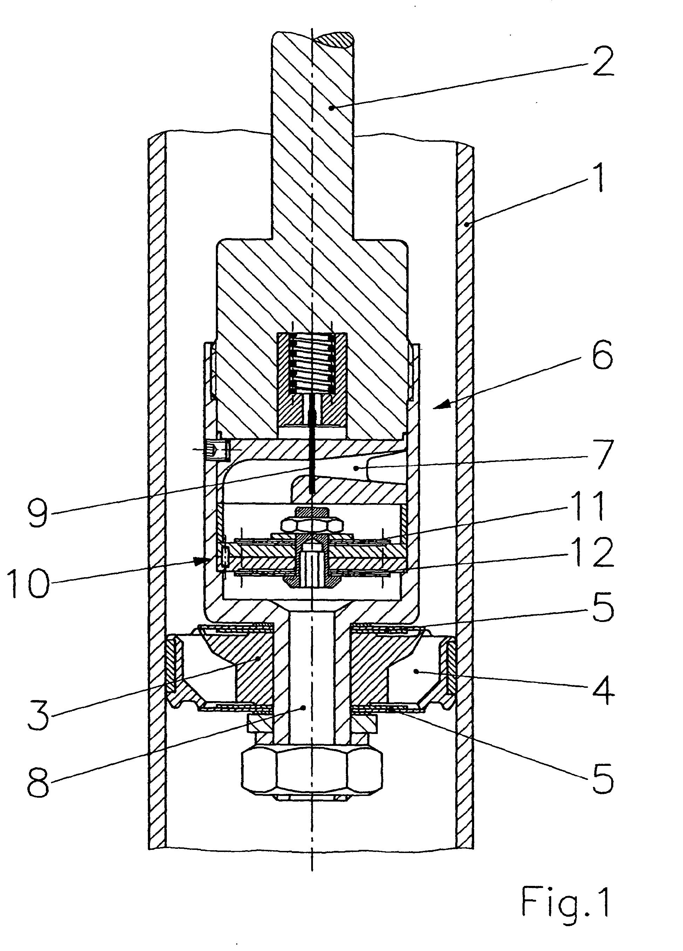

Stoßdämpfer für Kraftfahrzeuge moderner Bauart werden häufig mit steuerbaren oder regelbaren Bypässen ausgerüstet. Dadurch wird es möglich, die Dämpfungseigenschaften der Schwingungsdämpfer den jeweiligen Erfordernissen im Fahrbetrieb anzupassen und trotzdem sicherzustellen, dass eine sichere Straßenlage des Kraftfahrzeuges gewährleistet ist. Einen derartigen Stoßdämpfer zeigt Fig. 1. Es handelt sich hierbei um einen Einrohrstoßdämpfer mit einem Stoßdämpferrohr 1, das mit einer Dämpfungsflüssigkeit gefüllt ist. Am Ende einer oszillierend in das Stoßdämpferrohr ein- und austauchenden Kolbenstange 2 ist ein Dämpferkolbensystem angebracht. Das Dämpferkolbensystem weist einen klassischen Arbeitskolben 3 auf, der Durchbrüche 4 aufweist, die einseitig über Federscheibenpakete 5, die auch als Rückschlagventile wirken, abgedeckt sind.

Das Dämpferkolbensystem weist weiterhin eine Bypasseinrichtung 6 auf. Die Bypasseinrichtung 6 besteht aus einem regelbaren Zulaufkanal 7 und einem sich zentrisch durch den Arbeitskolben 3 erstreckenden weiteren Zulaufkanal 8. Die Regelung des Durchflusses erfolgt zum einen über einen Regelschieber 9 und zum anderen über einen Dämpferkolben 10, der ebenso wie der Arbeitskolben 3 Durchbrüche aufweist, die beidseitig wechselseitig mittels Federscheibenpakete 11, 12, die auch als Rückschlagventile wirken, verschlossen werden. Nach dem Stand der Technik, wie er in Fig. 1 dargestellt ist, ist der Dämpferkolben 10 ähnlich dem Arbeitskolben 3 mit vielen kleinen Durchbrüchen ausgebildet, was die vorbeschriebenen Nachteile bewirkt.

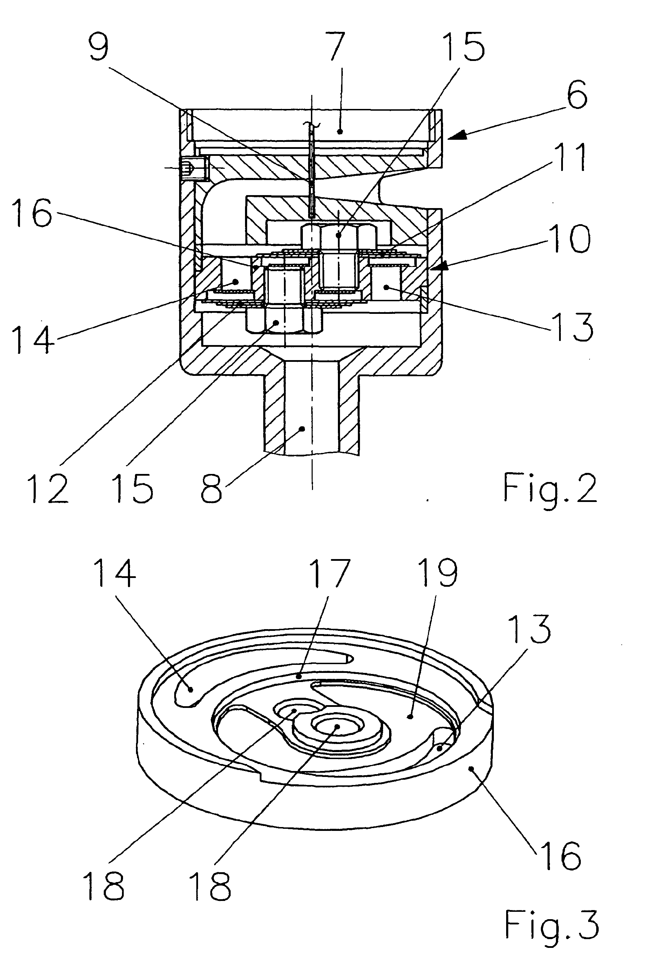

In den Fig. 2 bis 4 ist ein Dämpferkolben 10 der erfindungsgemäßen Art dargestellt. Dieser Dämpferkolben 10 dient, wie der Dämpferkolben 10 in Fig. 1, der Beeinflussung der Bypassströmung. Er liegt mit seinem äußeren Mantel in der hier topfförmig ausgebildeten Bypasseinrichtung 6 und weist zwei sichelförmig ausgebildete Durchbrüche 13, 14 auf. Die Federscheibenpakete 11, 12 verschließen einseitig und wechselseitig oben und unten die Durchbrüche 13, 14. Die Federscheibenpakete 11, 12 sind exzentrisch angeordnet und im Ausführungsbeispiel über Schrauben 15 mit dem Kolbenkörper 16 verschraubt.

Bei Zuströmen der Dämpfungsflüssigkeit durch den zentrischen Zulaufkanal 8 und Abströmen durch den Zulaufkanal 7 des Bypasses, also bei eintauchender Bewegung des Dämpferkolbensystems in das Dämpferrohr gemäß Fig. 1, hebt das Federscheibenpaket 11 von seiner Auflage ab und gibt den Durchfluss frei. Dagegen sperrt das Federscheibenpaket 12 als Rückschlagventil. Bei umgekehrter Strömungsrichtung hebt das Federscheibenpaket 12 ab und das Federscheibenpaket 11 sperrt.

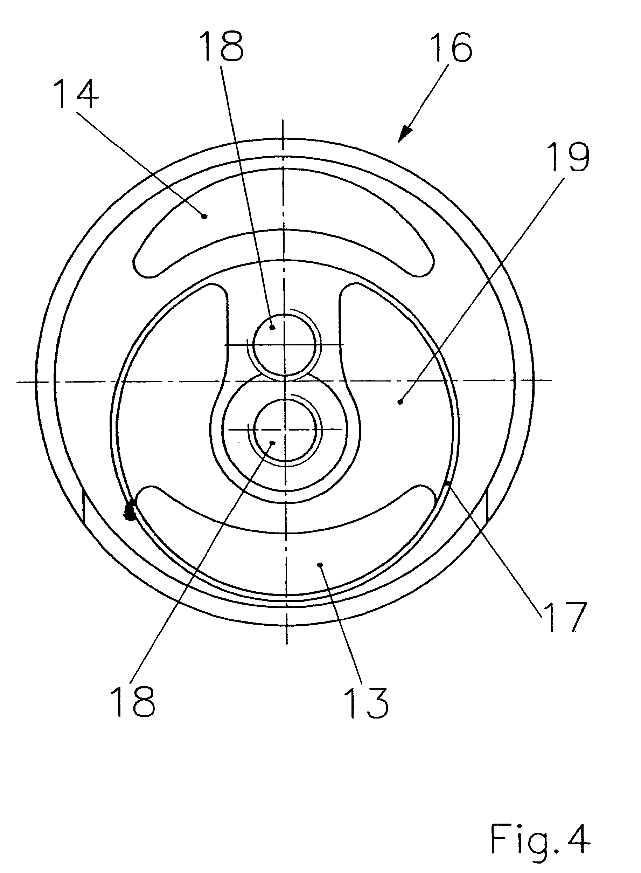

In den Fig. 3 und 4 sind zum besseren Verständnis die Federscheibenpakete 11 und 12 nicht dargestellt. Das nicht dargestellte Federscheibenpaket 11 liegt auf der umlaufenden Wulst 17 auf. Die Gewinde 18 zum Einsetzen der Schrauben 15 liegen jeweils zentrisch zur Wulst 17. Innerhalb der Wulst 17 ist eine Vertiefung 19 vorgesehen, in die in der Darstellung gemäß Fig. 3 und 4 der Durchbruch 14 mündet. Der andere Durchbruch 13 ist durch die exzentrische Anordnung der Federscheibenpakete 11, 12 nicht von Federscheiben abgedeckt und gewährt somit einen freien Zulauf.

Der vorbeschriebene Dämpferkolben 10 kann nicht nur für die Beeinflussung des Bypasses verwendet werden. Er kann in gleicher Weise als Arbeitskolben direkt an der Kolbenstange 2 befestigt sein. Hierzu muss die Kolbenaufnahme selbstverständlich topfförmig ausgebildet sein, um den Dämpferkolben halten zu können. In gleicher Weise ist der erfindungsgemäße Dämpferkolben 10 als Bodenventil bei einem Zweirohrdämpfer einsetzbar oder als Regelkolben für eine außerhalb des Stoßdämpfers angeordnete Regeleinheit.

### Bezugszeichenliste

- 1.: Stoßdämpferrohr
- 2.: Kolbenstange
- 3.: Arbeitskolben
- 4.: Durchbruch
- 5.: Federscheibenpaket
- 6.: Bypasseinrichtung
- 7.: Zulaufkanal
- 8.: Zulaufkanal
- 9.: Regelschieber
- 10.: Dämpferkolben
- 11.: Federscheibenpaket
- 12.: Federscheibenpaket
- 13.: Durchbruch
- 14.: Durchbruch
- 15.: Schraube
- 16.: Kolbenkörper
- 17.: Wulst
- 18.: Gewinde
- 19.: Vertiefung

## Patentansprüche

1. Dämpferkolben (10) für hydraulische Einrichtungen, insbesondere für hydraulische Schwingungsdämpfer an Kraftfahrzeugen, der einen hydraulischen Raum gegenüber einem anderen hydraulischen Raum verschließt und dessen Kolbenkörper (16) einen oder mehrere Durchbrüche (13, 14) aufweist, der/die jeweils einseitig stirnseitig mit einer federnden oder federbelasteten, kreisförmigen Abdeckscheibe verschlossen ist, wobei die Abdeckscheibe exzentrisch auf der Stirnseite des Kolbenkörpers (16) aufliegt, **dadurch gekennzeichnet, dass** der Durchbruch (13, 14) sichelförmig ausgebildet ist und die Abdeckscheibe (11, 12) derartig exzentrisch angeordnet ist, dass die sichelförmig ausgebildeten Durchbrüche (13, 14), welche die Abdeckscheibe (11, 12) beaufschlagen, die jeweils auf der ihnen gegenüber liegenden Stirnseite des Kolbenkörpers (16) angeordnet ist, neben den jeweils anderen Abdeckscheiben (11,12) angeordnet sind.

2. Dämpferkolben nach Anspruch 1, **dadurch gekennzeichnet, dass** die Abdeckscheibe mit ihrem äußeren Rand auf einer umlaufenden Wulst (17), die eine Vertiefung einschließt, in welche der sichelförmige Durchbruch (13, 14) mündet, aufliegt.

3. Dämpferkolben nach einem der Ansprüche 1 bis 2, **dadurch gekennzeichnet, dass** er an seinem Umfang im zugehörigen Bauteil gehalten wird.

4. Dämpferkolben nach einem der Ansprüche 1 bis 3, **dadurch gekennzeichnet, dass** jede Abdeckscheibe (11, 12) über einen separaten Befestigungspunkt (15, 18) am Kolbenkörper (16) befestigt ist und die Befestigungspunkte (15, 18) in radialer Richtung voneinander beabstandet angeordnet sind.

## Claims

1. Damper piston (10) for hydraulic devices, in particular for hydraulic vibration dampers on motor vehicles, which damper piston closes a hydraulic chamber with respect to another hydraulic chamber and whose piston body (16) comprises one or several openings (13, 14) which is/are closed in each case on one side on the end-side with a resilient or spring-loaded, circular cover disc, wherein the cover disc is supported in an eccentric manner on the end side of the piston body (16), **characterised in that** the opening (13, 14) is formed in the shape of a sickle and the cover disc (11, 12) is disposed in an eccentric manner such that the sickle-shaped openings (13, 14) which influence the cover disc (11, 12), which in each case is disposed on the end side of the piston body (16) lying opposite said openings, are disposed adjacent to the respective other cover discs (11, 12).

2. Damper piston as claimed in claim 1, **characterised in that** the cover disc is supported with its outer edge on a circumferential bead (17) which includes a recess, into which the sickle-shaped opening (13, 14) issues.

3. Damper piston as claimed in any one of claims 1 to 2, **characterised in that** it is held on its periphery in the associated component.

4. Damper piston as claimed in any one of claims 1 to 3, **characterised in that** each cover disc (11, 12) is attached to the piston body (16) by a separate attachment point (15, 18) and the attachment points (15, 18) are disposed spaced apart from each other in the radial direction.

## Revendications

1. Piston d'amortisseur (10) pour systèmes hydrauliques, en particulier pour amortisseurs hydrauliques de véhicules à moteur, qui ferme une chambre hydraulique par rapport à une autre chambre hydraulique, et dont le corps de piston (16) présente un ou plusieurs passages (13, 14) qui sont chaque fois fermés, à une face frontale, par un disque d'obturation circulaire, élastique ou chargé par un ressort, le disque d'obturation s'appuyant excentriquement sur la face frontale du corps de piston (16), **caractérisé en ce que** le passage (13, 14) est réalisé en forme de faucille, et le disque d'obturation (11, 12) est disposé excentriquement de telle sorte que les passages (13, 14) en forme de faucille, qui commandent le disque d'obturation (11, 12) qui est chaque fois disposé sur la face frontale du corps de piston (16) qui leur est opposée, sont disposés à côté des autres disques d'obturation (11, 12).

2. Piston d'amortisseur selon la revendication 1, **caractérisé en ce que** le disque d'obturation s'appuie avec son bord externe sur un bord périphérique (17) qui entoure une cavité dans laquelle débouche le passage (13, 14) en forme de faucille.

3. Piston d'amortisseur selon l'une des revendications 1 et 2, **caractérisé en ce qu'**il est maintenu à sa périphérie dans un composant approprié.

4. Piston d'amortisseur selon l'une des revendications 1 à 3, **caractérisé en ce que** chaque disque d'obturation (11, 12) est fixé sur le corps de piston (16) par un point de fixation (15, 18) séparé, et les points de fixation (15, 18) sont disposés à l'écart l'un de l'autre dans une direction radiale.
